# EUROPEAN PATENT APPLICATION

(11) **EP 4 596 260 A1**
(43) Date of publication of application: **06.08.2025**
(21) Application number: 23903017.4
(22) Date of filing: 09.08.2023
(51) Int. Cl.: B60C 11/12, B60C 11/03

(54) **PNEUMATIC TIRE**

(30) Priority: 13.12.2022 JP 2022198924
(71) Applicant: BRIDGESTONE CORPORATION, Chuo-ku Tokyo 104-8340 (JP)
(72) Inventor: SAKAI Kentaro, Tokyo 104-8340 (JP); TANAKA Yuta, Tokyo 104-8340 (JP); SONE Naoyuki, Tokyo 104-8340 (JP)
(74) Representative: Marks & Clerk LLP
(86) International application number: PCT/JP2023/029174
(87) International publication number: WO 2024/127711

(57) **Abstract**

The pneumatic tire of this disclosure has one or more sipes on a land portion. The sipe has a narrow sipe section that extends from an opening to the tread surface to an inner side in a tire radial direction, and a widened section that is connected to an inner end in the tire radial direction of the narrow sipe section and extends to a sipe bottom, having a sipe width that is larger than that of the narrow sipe section. An extension length in the tire radial direction of the widened section is longer than an extension length in the tire radial direction of the narrow sipe section. The widened section has, on a side connecting to the narrow sipe section, a part defined by two tire radial outer edges which extend in straight lines in a cross-sectional view at an angle with respect to the tire radial direction. Each of the tire radial outer edges extends at an inclination angle of 30 to 70° with respect to a width direction in a cross-section perpendicular to an extending direction of the sipe.

## Description

### TECHNICAL FIELD

This disclosure relates to a pneumatic tire.

### BACKGROUND

Generally, the tread portion of pneumatic tires has grooves for drainage. However, as wear progresses, the volume of the grooves decreases, which causes a problem of reduced drainage performance as wear progresses.

In response to this, a technology has been proposed to improve the drainage performance of tires as wear progresses, which involves providing sipes in the tread portion that increase in width as wear progresses (see, for example, Patent Document 1).

### CITATION LIST

### Patent Literature

PTL 1: JP2013-540077 A

### SUMMARY

### (Technical Problem)

However, if the sipe width increases as wear progresses, the rigidity of the land portion decreases, which may result in insufficient wet grip performance.

Therefore, the object of the present disclosure is to provide a pneumatic tire that improves drainage performance as wear progresses while minimizing the decrease in rigidity of the land portions.

### (Solution to Problem)

The gist of the present disclosure is as follows.
(1) A pneumatic tire having a land portion defined by grooves on a tread surface of a tread portion, wherein
   the land portion has one or more sipes,
   the sipe has a narrow sipe section that extends from an opening to the tread surface to an inner side in a tire radial direction, and a widened section that is connected to an inner end in the tire radial direction of the narrow sipe section and extends to a sipe bottom, having a sipe width that is larger than that of the narrow sipe section,
   an extension length in the tire radial direction of the widened section is longer than an extension length in the tire radial direction of the narrow sipe section,
   the widened section has, on a side connecting to the narrow sipe section, a part defined by two tire radial outer edges which extend in straight lines in a cross-sectional view at an angle with respect to the tire radial direction, and
   each of the tire radial outer edges extends at an inclination angle of 30 to 70° with respect to a width direction in a cross-section perpendicular to an extending direction of the sipe.

Here, the term "tread surface of tread portion" refers to an outer surface around the entire circumference of the tread portion that comes into contact with the road surface when a pneumatic tire is mounted on an applicable rim, filled with prescribed internal pressure, and loaded with maximum load.

The term "sipe" refers to a sipe with a width (opening width) that is narrow enough to close when in contact with the ground.

The terms "extension length", "sipe width", "inclination angle", etc., and the shapes and dimensions described below are all based on the reference condition in which a pneumatic tire is mounted on an applicable rim, filled with prescribed internal pressure, and unloaded, unless otherwise specified.

As used herein, the term "applicable rim" refers to the standard rim in the applicable size (Measuring Rim in ETRTO's STANDARDS MANUAL and Design Rim in TRA's YEAR BOOK) as described or as may be described in the future in the industrial standard, which is valid for the region in which the tire is produced and used, such as JATMA YEAR BOOK of JATMA (Japan Automobile Tyre Manufacturers Association) in Japan, STANDARDS MANUAL of ETRTO (The European Tyre and Rim Technical Organization) in Europe, and YEAR BOOK of TRA (The Tire and Rim Association, Inc.) in the United States (That is, the aforementioned "rim" includes current sizes as well as future sizes to be listed in the above-mentioned industrial standards. An example of the "future sizes to be listed" could be the sizes listed as "FUTURE DEVELOPMENTS" in the ETRTO 2013 edition.). For sizes not listed in these industrial standards, the term "applicable rim" refers to a rim with a width corresponding to the bead width of the pneumatic tire.

As used herein, the "prescribed internal pressure" refers to the air pressure (maximum air pressure) corresponding to the maximum load capacity of a single wheel in the applicable size and ply rating, as described in the aforementioned JATMA YEAR BOOK and other industrial standards. In the case that the size is not listed in the aforementioned industrial standards, the "prescribed internal pressure" refers to the air pressure (maximum air pressure) corresponding to the maximum load capacity specified for each vehicle in which the tire is mounted.

In addition, the term "maximum load" refers to the load corresponding to the maximum load capacity described above.

Here, when the each of the tire radial inner edges does not extend in a straight line in a cross-sectional view, the term "inclination angle of each of the tire radial inner edges with respect to a width direction in a cross-section perpendicular to an extending direction of the sipe" shall mean the "inclination angle" when approximated by a straight line using the least squares method.

Here, the term "tread edge" refers to the outermost position in the tire width direction of the contact patch under the maximum load condition. In addition, the term "circumferential main groove" refers to a groove that has a groove width (opening width) of 2 mm or more, among grooves which extend in the tire circumferential direction.

### (Advantageous Effect)

According to the present disclosure, it is possible to provide a pneumatic tire that improves drainage performance as wear progresses while minimizing the decrease in rigidity of the land portions.

### BRIEF DESCRIPTION OF THE DRAWINGS

In the accompanying drawings:
FIG. 1 is a developed view schematically illustrating a tread pattern of a pneumatic tire according to one embodiment of the present disclosure;
FIG. 2 is a cross-sectional view of a width direction sipe;
FIG. 3 is a cross-sectional view of a width direction sipe in a modified example;
FIG. 4 is a cross-sectional view in the tire width direction of a pneumatic tire according to one embodiment of the present disclosure; and
FIG. 5 is a cross-sectional view in the tire width direction of a pneumatic tire according to another embodiment of the present disclosure.

### DETAILED DESCRIPTION

Hereinafter, embodiments of the present disclosure will be described in detail with reference to the drawings. Here, the internal structure of pneumatic tires (hereafter, simply referred to as "tires") can be the same as that of conventional tires. As an example, the tire may have a pair of bead portions, a pair of sidewall portions connected to the pair of bead portions, and a tread portion arranged between the pair of sidewall portions. In addition, the tire may also have a carcass that straddles the bead portions in a toroidal shape, and a belt that is arranged on the outer side in the tire radial direction at the crown portion of the carcass.

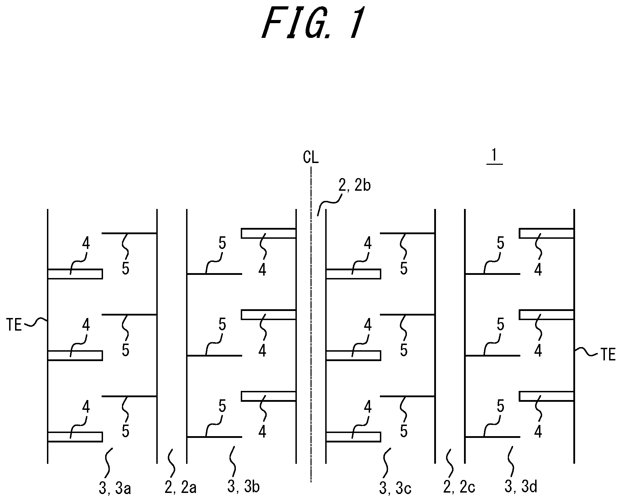

Figure 1 is a developed view schematically illustrating a tread pattern of a pneumatic tire according to one embodiment of the present disclosure.

As illustrated in Figure 1, the tire in this example has, on a tread surface 1 of a tread portion, a plurality of (three in the illustrated example) circumferential main grooves 2 (2a, 2b, 2c) that extend in the tread circumferential direction, and a plurality of (four in the illustrated example) land portions 3 (3a, 3b, 3c, 3d) that are defined between two circumferential main grooves 2 adjacent to each other in the tread width direction, of the plurality of the circumferential main grooves 2, or between the circumferential main grooves 2 (2a, 2c) and tread edges TE. In this example, one circumferential main groove 2b is located on the tire equatorial plane CL, and the other circumferential main grooves 2a and 2c are respectively located on one tire half portion in the tread width direction which is on one side and the other tire half portion in the tread width direction which is on the other side with the tire equatorial plane CL as the boundary. In this example, two land portions 3 are arranged in each tire half portion in the tread width direction. As illustrated, the land portions 3b and 3c are the land portions located on the center side in the tread width direction, and the land portions 3a and 3d are the land portions located adjacent to the tread edge TE.

In the example illustrated in Figure 1, there are three circumferential main grooves, but there can also be two or four or more. Therefore, the number of land portions can also be three or five or more. In addition, in this example, all land portions are rib-shaped land portions 3, but at least one land portion can be a non-rib-shaped land portion, i.e. a block-shaped land portion. It will be noted that the term "rib-shaped land portion" refers to a land portion that is not completely divided in the tread circumferential direction by a width direction groove extending in the tread width direction. Therefore, in this document, even if a land portion is completely divided in the tread circumferential direction by a width direction sipe, the land portion is a "rib-shaped land portion".

The groove width of the circumferential main groove 2 (opening width (opening width measured perpendicularly to the extending direction of the groove in a plan view)) is not particularly limited, as it depends on the number of the circumferential main grooves 2, but can be 5 to 25 mm, for example. Similarly, the groove depth (maximum depth) of the circumferential main groove 2 is not particularly limited, but can be 6 to 18 mm, for example.

In the illustrated example, in the plan view of the tread surface 1, the circumferential main grooves 2 all extend along the tread circumferential direction (without inclining), but at least one circumferential main groove 2 may extend inclined with respect to the tread circumferential direction, and in that case, it may extend at an inclination angle of, for example, 5° or less with respect to the tread circumferential direction. In addition, in the illustrated example, the circumferential main grooves 2 all extend straight in the tread circumferential direction, but at least one circumferential main groove 2 may have a zigzag or curved shape.

In the illustrated example, each land portion 3 has a plurality of width direction grooves 4 that extend in the tread width direction. Specifically, in this example, each of the (rib-shaped, in the illustrated example) land portions 3a and 3d adjacent to the tread edge TE has three width direction grooves 4 within the illustrated range, each of which extends from the tread edge TE to the inner side in the tread width direction and terminates within the (rib-shaped, in the illustrated example) land portions 3a, 3d. In addition, each of the (rib-shaped, in the illustrated example) land portions 3b and 3c on the center side in the tread width direction has three width direction grooves 4 within the illustrated range, each of which extends from the circumferential main groove 2b located on the tire equatorial plane CL to the outer side in the tread width direction and terminates within the (rib-shaped, in the illustrated example) land portions 3b and 3c. The number of the width direction grooves 4 can be set as appropriate. In the illustrated example, all of the land portions 3 have width direction grooves 4, however, when the tread surface 1 has the width direction grooves 4, it is sufficient if any of the land portions 3 have the width direction grooves 4, and it is preferable that the land portions 3 defined by the tread edge TE (in the illustrated example, the land portions 3a and 3d) have the width direction grooves 4.

Here, the groove width of the width direction groove 4 (opening width (opening width measured perpendicularly to the extending direction of the groove in a plane view)) is not particularly limited because it also depends on the number of the width direction grooves 4, but it can be 1.0 to 1.5 mm, for example. Similarly, the depth (maximum depth) of the width direction groove 4 is not particularly limited, but can be 4 to 18 mm, for example.

In the illustrated example, all of the width direction grooves 4 extend along the tread width direction (without inclining), but at least one width direction groove 4 may extend inclined with respect to the tread width direction. In this case, it is preferable that the width direction groove extends at an inclination angle of 45° or less, and more preferably of 30° or less with respect to the tread width direction. In addition, in the illustrated example, all of the width direction grooves 4 extend straight in the tread width direction, but at least one width direction groove 4 may have a bent portion.

Here, the width direction groove 4 is preferably open to the tread edge TE or the circumferential main groove 2, as in the illustrated example, from the perspective of improving drainage performance. On the other hand, in order to increase the rigidity of the land portion 3, the width direction groove 4 may not open to either the tread edge TE or the circumferential main groove 2, and its both ends may terminate within the land portion 3. In the land portion 3, which is defined by the two circumferential main grooves 2 adjacent to each other in the tread width direction, the width direction groove 4 may open in either of the two circumferential main grooves 2.

Each land portion 3 further has a plurality of width direction sipes 5 that extend in the tread width direction. In the illustrated example, each land portion 3 has a plurality of width direction sipes 5 that extend in the tread width direction. Specifically, in this example, each of the land portions 3a and 3d adjacent to the tread edge TE has three width direction sipes 5 within the illustrated range, each of which extends from the circumferential main grooves 2a and 2c respectively to the outer side in the tread width direction and terminates within the land portions 3a and 3d. In addition, each of the land portions 3b and 3c on the center side in the tread width direction has three width direction sipes 5 within the illustrated range, each of which extends from the circumferential main grooves 2a and 2c respectively to the inner side in the tread width direction and terminates within the land portions 3a and 3d. The number of the width direction sipes can be set as appropriate. In the illustrated example, all of the land portions 3 have width direction sipes 5, however, when the tread surface 1 has the width direction sipes 5, it is sufficient if any of the land portions 3 have the width direction sipes 5, and it is preferable that the land portions 3 defined by the tread edge TE (in the illustrated example, the land portions 3a and 3d) have the width direction sipes 5.

Here, the width of the width direction sipe 5 (opening width (opening width measured perpendicularly to the extending direction of the sipe in a plane view)) is not particularly limited because it also depends on the number of the width direction sipes 5, but it can be 0.2 to 1.0 mm, for example. Similarly, the depth (maximum depth) of the width direction sipe 5 is not particularly limited, but can be se to 4.0 to 18.0 mm, for example.

In the illustrated example, all of the width direction sipes 5 extend along the tread width direction (without inclining), but at least one width direction sipe 5 may extend inclined with respect to the tread width direction. In this case, it is preferable that the width direction sipe 5 extends at an inclination angle of 45° or less, and more preferably of 30° or less with respect to the tread width direction. In addition, in the illustrated example, all of the width direction sipes 5 extend straight in the tread width direction, but at least one width direction sipe 5 may have a bent portion.

Here, the width direction sipe 5 is preferably open to the tread edge TE or the circumferential main groove 2, as in the illustrated example, from the perspective of improving drainage performance. On the other hand, in order to increase the rigidity of the land portion 3, the width direction sipe 5 may not open to either the tread edge TE or the circumferential main groove 2, and both ends thereof may terminate within the land portion 3. In addition, in the land portion 3, which is defined by the two circumferential main grooves 2 adjacent to each other in the tread width direction, the width direction sipe 5 may open in either of the two circumferential main grooves 2.

Here, in the illustrated example, the width direction groove 4 and the width direction sipe 5 are arranged alternately when viewed in the tread circumferential direction. This allows for a more appropriate balance of rigidity in the land portion 3. On the other hand, when viewed in the tread circumferential direction, there may be a location where two or more width direction grooves 4 are arranged continuously between two width direction sipes 5 adjacent in the tread circumferential direction, or a location where two or more width direction sipes 5 are arranged continuously between two width direction grooves 4 adjacent in the tread circumferential direction.

In addition, in the illustrated example, both the width direction groove 4 and the width direction sipe 5 terminate at the center in the tread width direction of the land portion 3, but the width direction groove 4 and the width direction sipe 5 may have an overlap portion when projected in the tread circumferential direction, or may be arranged so as not to overlap.

In this way, the pneumatic tire of this embodiment has the land portion defined by the grooves in the tread surface 1 of the tread portion, and the land portion 3 has one or more sipes.

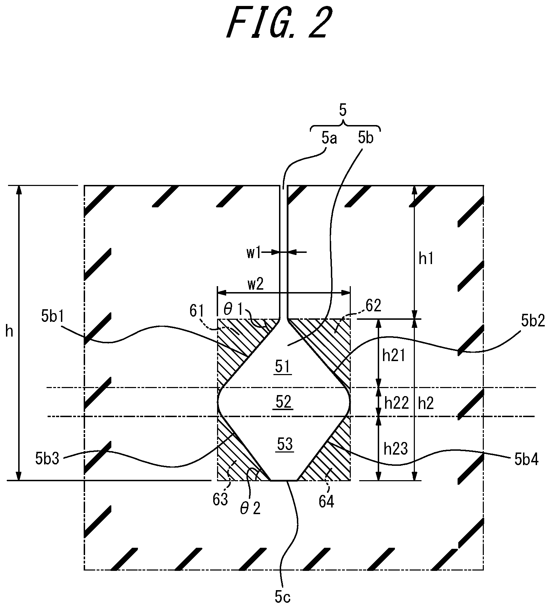

Figure 2 is a cross-sectional view of the width direction sipe (in a cross-section perpendicular to the extending direction thereof). As illustrated in Figure 2, the width direction sipe 5 has a narrow sipe section 5a that extends from an opening to the tread surface 1 to the inner side in the tire radial direction, and a widened section 5b that is connected to the inner end in the tire radial direction of the narrow sipe section 5a and extends to a sipe bottom 5c, having a sipe width that is larger than that of the narrow sipe section 5a.

In this example, the narrow sipe section 5a is a flat sipe with a constant (that is, equal to the opening width at the tread surface 1) sipe width (measured parallel to the tread surface 1 in a cross-sectional view). On the other hand, the narrow sipe section 5a may be a three-dimensional sipe that extends while bending in the depth direction.

In this embodiment, the widened section 5b has a sipe width gradually increasing part 51 where the sipe width gradually increases from the outer side to the inner side in the tire radial direction, connecting to the narrow sipe section, and a sipe width gradually decreasing part 53 where the sipe width gradually decreases from the outer side to the inner side in the tire radial direction, extending to the sipe bottom. In this example, the widened section 5b has a middle part 52 with a small change in the sipe width between the sipe width gradually increasing part 51 and the sipe width gradually decreasing part 53. In addition, in the illustrated example, the sipe bottom 5c is straight, but it can also be curved, and a curved shape is preferable to prevent the occurrence of cracks in the sipe bottom 5c.

In the illustrated example, the widened section 5b is rhombic in cross-sectional view. In other words, when the width of the connecting part to the narrow sipe section 5a, the middle part 52, and the width of the connecting part to the sipe bottom 5c are considered as points, the approximate shape in cross-sectional view of the widened section 5b is rhombic.

Here, the widened section 5b has, on a side connecting to the narrow sipe section 5a, a part defined by two tire radial outer edges 5b1, 5b2 which extend in straight lines in a cross-sectional view at an angle with respect to the tire radial direction, and each of the tire radial outer edges 5b1, 5b2 extends at an inclination angle θ1 of 30 to 70° (more preferably, 40 to 65°) with respect to a width direction in a cross-section perpendicular to the extending direction of the sipe. In the illustrated example, the tire radial outer edge 5b1 and the tire radial outer edge 5b2 are inclined in opposite directions (so that the extension lines intersect each other) at the same inclination angle with respect to the width direction in a cross-section perpendicular to the extending direction of the sipe. Therefore, in this example, the sipe width gradually increasing part 51 is roughly an isosceles triangle in cross-sectional view (when the width of the connecting part to the narrow sipe section 5a is considered to be a point).

In addition, the widened section 5b has, on the side of the sipe bottom 5c, a part defined by two tire radial inner edges 5b3 and 5b4 which are inclined with respect to the tire radial direction, and each of the tire radial inner edges 5b3 and 5b4 extends at an inclination angle θ2 of 30 to 60° (more preferably, 35 to 55°) with respect to the width direction in a cross-section perpendicular to the extending direction of the sipe. In the illustrated example, the tire radial inner edge 5b3 and the tire radial inner edge 5b4 are inclined in opposite directions (so that the extension lines intersect each other) at the same inclination angle with respect to the width direction in a cross-section perpendicular to the extending direction of the sipe. Therefore, in this example, the sipe width gradually decreasing part 53 is roughly an isosceles triangle in cross-sectional view (when the width of the bottom of the sipe is considered to be a point).

Here, the sipe width w1 of the narrow sipe section 5a is not particularly limited, but can be, for example, 0.2 to 1.0 mm. The extension length in the tire radial direction, h1, of the narrow sipe section 5a is not particularly limited, but can be, for example, 2.0 to 12 mm.

The maximum width w2 of the widened section 5b is not particularly limited, but can be, for example, 1.2 to 6.0 mm. The extension length in the tire radial direction, h2, of the widened section 5b is longer than the extension length in the tire radial direction, h1, of the narrow sipe section 5a, and is not particularly limited, but can be, for example, 2.5 to 11.0 mm.

In the example in Figure 2, the extension length in the tire radial direction, h21, of the sipe width gradually increasing part 51 is not particularly limited, but can be, for example, 1.0 to 3.0 mm; the extension length in the tire radial direction, h22, of the middle part 52 is not particularly limited, but can be, for example, 0.2 to 0.4 mm; and the extension length in the tire radial direction, h23, of the sipe width gradually decreasing part 53 is not particularly limited, but can be, for example, 1.5 to 8.0 mm. The sipe depth (maximum depth) h of the widthwise sipe 5 is not particularly limited, but can be, for example, 4.0 to 18.0 mm.

The ratio h21/h23 is preferably 0.9 to 1.1. In addition, the width of the sipe bottom 5c is preferably larger than the sipe width of the narrow sipe section 5a.

The effects of the pneumatic tire of the present embodiment will be described below.

First, since the pneumatic tire of this embodiment has one or more widthwise sipe 5 with the widened section 5b in the land portion 3, it is possible to improve drainage performance as wear progresses. In addition, since the extension length in the tire radial direction, h2, of the widened section 5b is longer than the extension length in the tire radial direction, h1, of the narrow sipe section 5a, the period during which the drainage performance can be improved can be secured for a long period of time.

The present inventors focused on the rigidity due to the shape of the land portion itself which is defined by the sipe, and attempted to provide variously shaped rubber portion at the corners of the widened section when the shape of the widened section in a cross-sectional view is rectangular so that to reinforce the rigidity at the corners. As a result, they found that, as rubber potions 61 to 63 illustrated in Figure 2, the case of having a triangular shape in a cross-sectional view had a higher burden rate of compression rigidity per unit volume than the case of having rectangular shape in a cross-sectional view, and that rigidity could be improved efficiently. In addition, the inventors also focused on the inclination angle, with respect to the width direction in a cross-section perpendicular to the extending direction of the sipe, of the hypotenuse of the rubber part that is triangular in a cross-sectional view. As a result, they found that, as can be seen in the examples below, when the inclination angle of the two tire radial outer edges 5b1 and 5b2 with respect to the width direction in a cross-section perpendicular to the extending direction of the sipe was 30 to 70° (more preferably, 40 to 65°), or when the inclination angle of the two tire radial inner edges 5b3 and 5b4 with respect to the width direction in a cross-section perpendicular to the extending direction of the sipe was 30 to 60°(more preferably, 35 to 55°), the burden rate of compressive rigidity per unit volume was the highest.

In this embodiment, the widened section 5b has, on a side connecting to the narrow sipe section 5a, a part defined by two tire radial outer edges 5b1 and 5b2 which extend in straight lines in a cross-sectional view at an angle with respect to the tire radial direction, and each of the tire radial outer edges 5b1 and 5b2 extends at an inclination angle of 30 to 70° with respect to the width direction in a cross-section perpendicular to the extending direction of the sipe, therefore, the rigidity of the land portion defined by the sipes is high relative to the sipe volume.

As described above, according to the pneumatic tire of this embodiment, it is possible to improve drainage performance as wear progresses while minimizing the decrease in rigidity of the land portion.

As in the above embodiment, it is preferable that the widened section 5b has, on a side of the sipe bottom 5c, a part defined by two tire radial inner edges 5b3 and 5b4 which are inclined with respect to the tire radial direction, and each of the tire radial inner edges 5b3 and 5b4 extends at an inclination angle of 30 to 60° (more preferably, 35 to 55°) with respect to the width direction in a cross-section perpendicular to the extending direction of the sipe. This makes it possible to have a shape with high rigidity relative to the sipe volume even on the side of the sipe bottom 5c, further suppressing the decrease in rigidity of the land portion.

In order to achieve the effects described above, it is preferable that the widened section 5b has the sipe width gradually increasing part 51 where the sipe width gradually increases from the outer side to the inner side in the tire radial direction, connecting to the narrow sipe section 5a; and a sipe width gradually decreasing part 53 where the sipe width gradually decreases from the outer side to the inner side in the tire radial direction, extending to the sipe bottom 5c. Similarly, the widened section 5b is preferably rhombic in cross-sectional view.

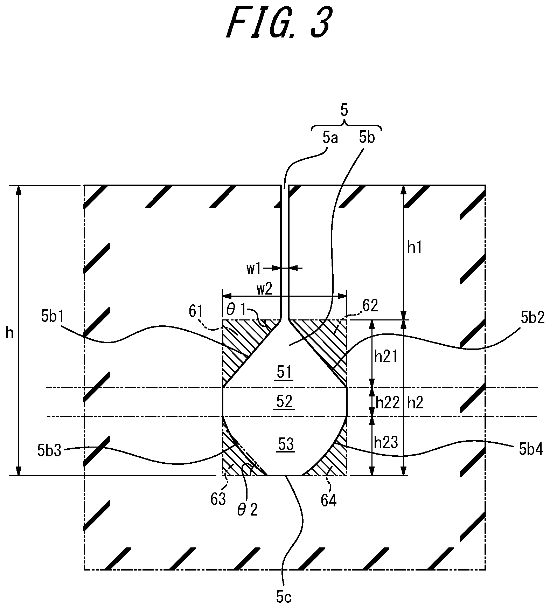

Figure 3 is a cross-sectional view of the widthwise sipe in the modified example. The widthwise sipe 5 illustrated in Figure 3 also has a narrow sipe section 5a that extends from an opening to the tread surface 1 to the inner side in the tire radial direction, and a widened section 5b that is connected to the inner end in the tire radial direction of the narrow sipe section 5a and extends to the sipe bottom 5c, having a sipe width that is larger than that of the narrow sipe section 5a. The sipe illustrated in Figure 3 differs from the widthwise sipe illustrated in Figure 2 in that it has a smaller maximum width.

The narrow sipe section 51 is the same as that illustrated in Figure 2, and therefore will not be described again. Also, in the case of Figure 3, the widened section 5b has a sipe width gradually increasing part 51 where the sipe width gradually increases from the outer side to the inner side in the tire radial direction, connecting to the narrow sipe section 5a; and a sipe width gradually decreasing part 53 where the sipe width gradually decreases from the outer side to the inner side in the tire radial direction, extending to the sipe bottom. In this example, the widened section 5b has the middle part 52 with a roughly constant sipe width between the sipe width gradually increasing part 51 and the sipe width gradually decreasing part 53. In the illustrated example, the middle part 52 is defined into straight in a cross-sectional view, but it may also be curved within the range where the sipe width is approximately constant. In addition, in the illustrated example, the sipe bottom 5c is straight, but it can also be curved, and a curved shape is preferable to prevent cracks from forming in the sipe bottom 5c.

In the illustrated example, the widened section 5b is roughly hexagonal in cross-sectional view. In other words, when the width of the connecting part to the narrow sipe section 5a and the width of the connecting part to the sipe bottom 5c are considered as points, the approximate shape in cross-sectional view of the widened section 5b is hexagonal (unlike in Figure 2, the middle part 52 is not considered as a point).

As in the case of Figure 2, the widened section 5b has, on a side connecting to the narrow sipe section 5a, a part defined by two tire radial outer edges 5b1 and 5b2 which extend in straight lines in a cross-sectional view at an angle with respect to the tire radial direction, and each of the tire radial outer edges 5b1 and 5b2 extends at an inclination angle θ1 of 30 to 70° (more preferably, 40 to 65°) with respect to the width direction in a cross-section perpendicular to the extending direction of the sipe. In the illustrated example, the tire radial outer edge 5b1 and the tire radial outer edge 5b2 are inclined in opposite directions (so that the extension lines intersect each other) at the same inclination angle with respect to the width direction in a cross-section perpendicular to the extending direction of the sipe. Therefore, in this example, the sipe width gradually increasing part 51 is roughly an isosceles triangle in cross-sectional view.

In addition, as in the case of Figure 2, the widened section 5b has, on a side of the sipe bottom 5c, a part defined by two tire radial inner edges 5b3 and 5b4 which are inclined with respect to the tire radial direction, and each of the tire radial inner edges 5b3 and 5b4 extends at an inclination angle θ2 of 30 to 60° (more preferably, 35 to 55°) with respect to the width direction in a cross-section perpendicular to the extending direction of the sipe. In the illustrated example, the tire radial inner edge 5b3 and the tire radial inner edge 5b4 are inclined in opposite directions (so that the extension lines intersect each other) at the same inclination angle with respect to the width direction in a cross-section perpendicular to the extending direction of the sipe. Therefore, in this example, the sipe width gradually decreasing part 53 is roughly an isosceles triangle in cross-sectional view.

Here, the sipe width w1 of the narrow sipe section 5a is not particularly limited, but can be, for example, 0.2 to 1.0 mm. The extension length in the tire radial direction, h1, of the narrow sipe section 5a is not particularly limited, but can be, for example, 2.0 to 12 mm.

The maximum width w2 of the widened section 5b is not particularly limited, but can be set to, for example, 2.0 to 4.0 mm. The extension length in the tire radial direction, h2, of the widened section 5b is longer than the extension length in the tire radial direction, h1, of the narrow sipe section 5a, and is not particularly limited, but can be, for example, 2.0 to 6.0 mm.

In the example in Figure 3, the extension length in the tire radial direction, h21, of the sipe width gradually increasing part 51 is not particularly limited, but can be, for example, 0.8 to 2.5 mm; the extension length in the tire radial direction, h22, of the middle part 52 is not particularly limited, but can be, for example, 0.4 to 1.5 mm; and the extension length in the tire radial direction, h23, of the sipe width gradually decreasing part 53 is not particularly limited, but can be, for example, 0.6 to 2.0 mm. The sipe depth (maximum depth) h of the widthwise sipe 5 is not particularly limited, but can be, for example, 4.0 to 18.0 mm.

In the case of Figure 3, the ratio h21/h23 is preferably 0.7 to 1.3. In addition, it is preferable that the width of the sipe bottom 5c is larger than the sipe width of the narrow sipe section 5a.

The modified example in Figure 3 also has the effect of improving drainage performance as wear progresses, while minimizing the reduction in rigidity of the land portion. Furthermore, in the modified example in Figure 3, the side portions are approximately straight in cross-sectional view, which helps to suppress distortion when the tire is removed from the mold, and more effectively prevents rubber cracking.

The example above describes a case where the sipe is a widthwise sipe that extends (without inclining) in the tire width direction, but the sipe may also be a widthwise sipe that extends at an angle with respect to the tire width direction. In addition, the sipe may be a circumferential sipe that extend in the tire circumferential direction. In this case, the shape and dimensions in a cross-section that is orthogonal to the tire circumferential direction (the extension direction of the circumferential sipes) will be as illustrated in Figures 2 and 3, for example. Furthermore, it is also possible to use a pattern that combines the widthwise sipe and the circumferential sipe.

The pneumatic tires of this embodiment are particularly suitable for use as passenger vehicle tires and heavy-duty tires (particularly, truck and bus tires).

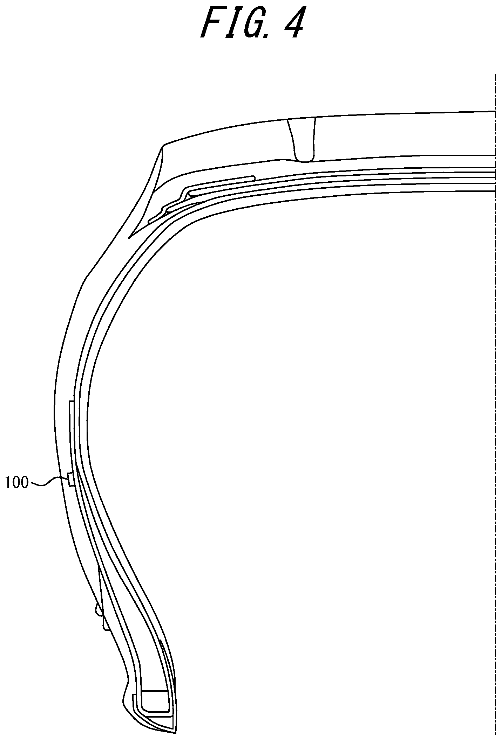

Figure 4 is a cross-sectional view of a pneumatic tire in the tire width direction, according to one embodiment of the present disclosure. As illustrated in Figure 4, the tire may comprise an RF tag as a communication device. The RF tag comprises an IC chip and an antenna. For example, the RF tag may be disposed, for example, by being sandwiched between a plurality of members of the same type or different types that make up the tire. This makes it easier to attach the RF tag during tire manufacturing, and improves the productivity of tires comprising the RF tag. In this example, the RF tag may be disposed by being sandwiched between the bead filler and other components adjacent to the bead filler. The RF tag may be embedded in any of the components that make up the tire. In this way, the load applied to the RF tag can be reduced compared to when it is disposed by being sandwiched between a plurality of components that make up the tire. This improves the durability of the RF tag. In this example, the RF tag may be embedded in rubber components such as tread rubber and side rubber. It is preferable that the RF tag is not disposed at positions, at the boundary between components with different levels of rigidity in the direction of peripheral length, which is the direction along the outer surface of the tire in a cross-sectional view in the tire width direction. In this way, the RF tag is not disposed at positions where strain is likely to be concentrated based on the rigidity gap. As a result, the load applied to the RF tag can be reduced. This improves the durability of the RF tag. In this example, it is preferable that the RF tag is not disposed at the boundary between the end portion of the carcass and the components adjacent to this end portion of the carcass (e.g. side rubber) in a cross-sectional view in the tire width direction. The number of RF tags is not particularly limited. A tire may include only one RF tag, or may include two or more RF tags. Here, the RF tag is described as an example of a communication device, but a communication device other than the RF tag may also be used.

For example, the RF tag can be disposed in the tread portion of the tire. In this way, the RF tag will not be damaged by side cuts on the tire. For example, the RF tag may be disposed in the center of the tread portion in the tire width direction. The center of the tread is a position where the deflection is not concentrated in the tread portion. In this way, the load applied to the RF tag can be reduced. This improves the durability of the RF tag. In addition, this also prevents the tire from having differences in communication performance of the RF tag from both outer sides in the tire width direction. In this example, the RF tag may be disposed, for example, within a range of 1/2 of the tread width in tire width direction, with the tire equatorial plane as the center. For example, the RF tag may be disposed at the tread end portion in the tire width direction. If the position of the reader that communicates with the RF tag is predetermined, the RF tag can be disposed, for example, on the tread end portion on one side close to this reader. In this example, the RF tag may be disposed, for example, within a range of 1/4 of the tread width in the tire width direction, with the tread end as the outer end.

The RF tag may be disposed, for example, closer to the tire cavity than the carcass which includes one or more carcass plies straddling bead portions. In this way, the RF tag becomes less susceptible to damage from external impacts to the tire, such as side cuts and nail punctures, etc. As an example, the RF tag may be disposed in close contact with the surface of the carcass on the tire cavity side. As another example, when there is another component closer to the tire cavity than the carcass, the RF tag may be disposed, for example, between the carcass and this other component located closer to the tire cavity than the carcass. An example of another component located closer to the tire cavity than the carcass is an inner liner that forms the inner surface of the tire. As another example, the RF tag may be attached to the inner surface of the tire facing the tire cavity. By having a configuration in which the RF tag is attached to the inner surface of the tire, it is easy to attach the RF tag to the tire, and to inspect and replace the RF tag. In other words, the ease of attachment and maintenance of the RF tag can be improved. In addition, by attaching the RF tag to the inner surface of the tire, it is possible to prevent the RF tag from becoming the core of tire failures, compared to a configuration in which the RF tag is embedded inside the tire. In addition, when the carcass has a plurality of carcass plies and there is a position where the plurality of carcass plies are overlapped each other, the RF tag may be disposed between the overlapped carcass plies.

For example, the RF tag may be disposed, in the tread portion of the tire, on the outer side in the tire radial direction of a belt that includes one or more belt plies. As an example, the RF tag may be disposed on the outer side of the belt in the tire radial direction and in close contact with the same. As another example, when a reinforcement belt layer is provided, the RF tag may be disposed on the outer side of the reinforcement belt layer in the tire radial direction and in close contact with the same. As yet another example, the RF tag may be embedded in the tread rubber on the outer side of the belt in the tire radial direction. By disposing the RF tag, in the tread portion of the tire, on the outer side of the belt in the tire radial direction, communication with the RF tag from the outer side of the tire in the radial direction is less likely to be disturbed by the belt. This improves the communication performance with the RF tag from the outer side of the tire in the tire radial direction. In addition, the RF tag may be embedded in the tread rubber on the inner side of the belt in the tire radial direction. In this way, the outer side of the RF tag in the tire radial direction is covered by the belt, so the RF tag is less likely to be damaged by impacts from the tread surface or by nails sticking into it. As an example of this, the RF tag may be disposed between the belt and the carcass, which is located on the inner side of the belt in the tire radial direction. In addition, when the belt comprises a plurality of belt plies, the RF tag may be disposed between any two belt plies in the tread portion of the tire. In this way, the outer side of the RF tag in the tire radial direction is covered by one or more belt plies, so the RF tag becomes less likely to be damaged by impacts from the tread surface or by nails sticking into it.

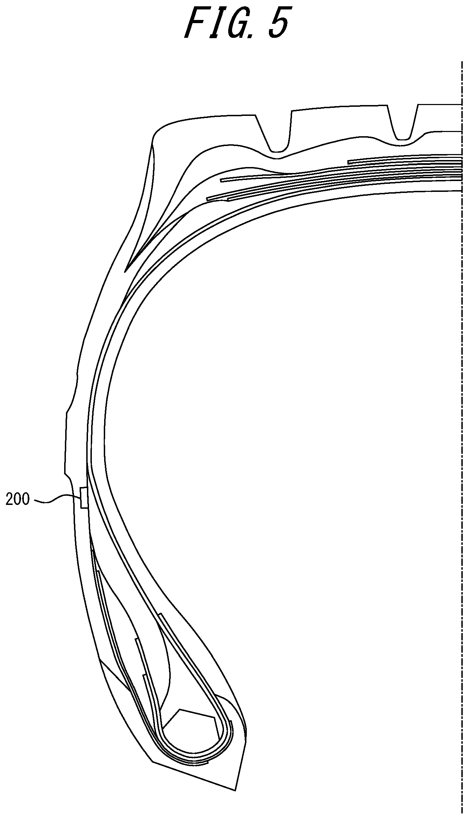

Figure 5 is a cross-sectional view in the tire width direction of a pneumatic tire according to another embodiment of the present disclosure. The RF tag may be disposed, for example, between cushion rubber and tread rubber, or between the cushion rubber and side rubber. In this way, the impact on the RF tag can be mitigated by the cushion rubber. This improves the durability of the RF tag. In addition, the RF tag may be embedded in the cushion rubber, for example. Furthermore, the cushion rubber may be composed of a plurality of rubber members of the same or different types that are adjacent to each other. In such a case, the RF tag may be disposed by being sandwiched between the plurality of rubber components that make up the cushioning rubber.

The RF tag may be disposed, for example, at a position in the sidewall portion or the bead portion of the tire. For example, the RF tag may be disposed on the sidewall portion or the bead portion on one side that is close to the reader that can communicate with the RF tag. In this way, the communication performance between the RF tag and the reader can be improved. As an example, the RF tag can be disposed between the carcass and the side rubber, or between the tread rubber and the side rubber. For example, the RF tag may be disposed between a position where the tire has a maximum width and a position of the tread surface in the tire radial direction. In this way, compared to a configuration where the RF tag is disposed on the inner side in the tire radial direction of the tire maximum width position, it is possible to improve the communication performance with the RF tag from the outer side of the tire in the tire radial direction. For example, the RF tag may be disposed on the inner side in the tire radial direction of the tire maximum width position. In this way, the RF tag is disposed near the bead portion where rigidity is high. Therefore, the load applied to the RF tag is reduced, which in turn improves the durability of the RF tag. As an example, the RF tag may be disposed at a position adjacent to the bead core in the radial direction or the tire width direction. The area around the bead core is less prone to strain. Therefore, the load applied to the RF tag is reduced, which in turn improves the durability of the RF tag. In particular, it is preferable that the RF tag be disposed on the inner side of the tire maximum width position in the tire radial direction and on the outer side of the bead core in the bead portion in the tire radial direction. In this way, the durability of the RF tag can be improved, while the communication between the RF tag and the reader is less likely to be disturbed by the bead core and the communication performance of the RF tag can be improved. In addition, when the side rubber is composed of a plurality of rubber components of the same or different types that are adjacent to each other in the tire radial direction, the RF tag may be disposed by being sandwiched between the plurality of rubber components that make up the side rubber.

As illustrated in Figure 4, the RF tag may be disposed by being sandwiched between the bead filler and the component adjacent to the bead filler. In this way, the RF tag can be disposed in a position where the strain is less likely to be concentrated due to the arrangement of the bead filler. Therefore, the load applied to the RF tag is reduced, which in turn improves the durability of the RF tag. The RF tag may be disposed, for example, by being sandwiched between the bead filler and the carcass. The part of the carcass, that sandwiches the RF tag in place together with the bead filler, may be located on the outer side in the tire width direction with respect to the bead filler, or it may be located on the inner side in the tire width direction with respect to the bead filler. When the part of the carcass that sandwiches the RF tag in place together with the bead filler is located on the outer side in the tire width direction of the bead filler, the load applied to the RF tag caused by impact or damage to the tire from the outside of the tire in the tire width direction can be reduced even more. This makes it possible to further improve the durability of the RF tag. In addition, the bead filler may have a portion that is arranged adjacent to the side rubber. In such a case, the RF tag may be disposed by being sandwiched between the bead filler and the side rubber. Furthermore, the bead filler may also have a portion that is arranged adjacent to a rubber chaffer. In such a case, the RF tag may be disposed by being sandwiched between the bead filler and the rubber chaffer.

As illustrated in Figure 5, the RF tag may be disposed between a stiffener and the component adjacent to the stiffener. In this way, the RF tag can be disposed in a position where the strain is less likely to be concentrated due to the placement of the stiffener. Therefore, the load applied to the RF tag is reduced, which in turn improves the durability of the RF tag. For example, the RF tag may be disposed by being sandwiched between the stiffener and the side rubber. Alternatively, the RF tag may be disposed by being sandwiched between the stiffener and the carcass. The part of the carcass, that sandwiches the RF tag in place together with the stiffener, may be located on the outer side in the tire width direction with respect to the stiffener, or it may be located on the inner side in the tire width direction with respect to the stiffener. When the part of the carcass, that sandwiches the RF tag in place together with the stiffener, is located on the outer side in the tire width direction with respect to the stiffener, the load applied to the RF tag caused by impact or damage to the tire from the outside side of the tire in the tire width direction can be reduced even more. This makes it possible to further improve the durability of the RF tag. The stiffener may also comprise a part that is arranged adjacent to a rubber chaffer. In such cases, the RF tag may be disposed by being sandwiched between the stiffener and the rubber chaffer. The stiffener may comprise a part that is adjacent to a hat rubber on the outer side in the tire width direction. In this case, the RF tag may be disposed by being sandwiched between the stiffener and the hat rubber. The stiffener may be composed of a plurality of rubber components of different hardness. In such a case, the RF tag may be disposed by being sandwiched between the plurality of rubber components that make up the stiffener. The RF tag may be disposed by being sandwiched between the hat rubber and the component adjacent to the hat rubber. For example, the RF tag may be disposed by being sandwiched between the hat rubber and the carcass ply. In this way, the impact on the RF tag can be mitigated by the hat rubber, and this improves the durability of the RF tag.

The RF tag may be disposed, for example, between the rubber chaffer and the side rubber. In this way, the RF tag can be disposed in a position where the strain is less likely to be concentrated due to the disposition of the rubber chaffer. This reduces the load applied to the RF tag, and improves the durability of the RF tag. The RF tag may be disposed, for example, by being sandwiched between the rubber chafer and the carcass. In this way, the load applied to the RF tag due to impact or damage from the rim can be reduced. This improves the durability of the RF tag.

As illustrated in Figure 5, the RF tag may be disposed by being sandwiched between a wire chafer and another component that is adjacent to the outer side or inner side of the wire chafer in the tire width direction. In this way, the position of the RF tag is less likely to change when the tire deforms. This reduces the load applied to the RF tag when the tire deforms, and this improves the durability of the RF tag. Another component adjacent to the outer side or inner side of the wire chafer in the tire width direction may be a rubber member, such as a rubber chaffer. In addition, Another component adjacent to the outer side or inner side of the wire chafer in the tire width direction may be, for example, a carcass..

As illustrated in Figure 4, a belt reinforcement layer may be provided on the outer side of the belt in the tire radial direction. For example, the belt reinforcement layer may be formed of a cord made of polyethylene terephthalate that is spirally wound continuously in the tire circumferential direction. The code is made by applying adhesive treatment under a tension of 6.9×10⁻² N/tex or more, and the elastic modulus at a load of 29.4 N measured at 160°C may be 2.5 mN/tex% or more. Furthermore, the belt reinforcement layer may be disposed to cover the entire belt, or it may be disposed to cover only the two ends of the belt. Moreover, the winding density per unit width of the belt reinforcement layer may vary depending on the position in the width direction. In this way, it is possible to reduce road noise and flat spots without reducing high-speed durability.

### EXAMPLES

### (Example 1)

In order to verify the effectiveness of this disclosure, a simulation was conducted to evaluate the shear rigidity of the sipe illustrated in Figure 2 (Example 1), the sipe illustrated in Figure 3 (Example 2), and the sipe with a widened section that is rectangular in cross-sectional view (the configuration of the narrow sipe section is the same as Examples 1 and 2, and the maximum width of the widened section is also the same as Examples 1 and 2)

### (Comparative Example).

For Example 1, w1 = 0.2 mm, w2 = 3.0 mm, h1 = 3.2 mm, h21 = 1.75 mm, h22 = 0.10 mm, and h23 = 1.75 mm; each of the tire radial outer edges extends at an inclination angle of 52° with respect to a width direction in a cross-section perpendicular to the extending direction of the sipe; and each of the tire radial inner edges extended at an inclination angle of 52° with respect to a width direction in a cross-section perpendicular to the extending direction of the sipe.

For Example 2, w1 = 0.2 mm, w2 = 2.6 mm, h1 = 3.2 mm, h21 = 1.22 mm, h22 = 0.88 mm, and h23 = 1.5 mm; each of the tire radial outer edges extended at an inclination angle of 52° with respect to a width direction in a cross-section perpendicular to the extending direction of the sipe; and each of the tire radial inner edges extended at an inclination angle of 48° with respect to a width direction in a cross-section perpendicular to the extending direction of the sipe.

The evaluation of shear rigidity was conducted by simulating the comparison of the frictional force in the shear direction that occurs on the tread surface when a block (30.0 x 36.0 x 8.0 mm) containing a sipe is subjected to a shear strain of approximately 6.0%.

In an index where the Comparative Example is set to 100 (the higher the number, the higher the shear rigidity), the value for the Example 1 was 102.9.

Next, a test was carried out on Examples 1 and 2 to evaluate distortion when removed from the mold. The test was performed by photographing the blade being pulled out of the mold in order to calculate the maximum distortion that occurred when the blade was removed from the mold. In an evaluation using an index where the distortion of Example 1 was set to 100 (the larger the number, the greater the distortion), Example 2 had a value of 78.3, and Example 2 was able to suppress distortion better than Example 1.

### [Contributing to the United Nations-led Sustainable Development Goals (SDGs)]

The SDGs have been proposed in order to realize a sustainable society. One embodiment of this disclosure is considered to be a technology that can contribute to "No.12_Ensure Sustainable Consumption and Production Patterns" and "No.13_Take Urgent Action to Combat Climate Change and its Impacts".

### REFERENCE SIGNS LIST

- 1: Tread
- 2: Circumferential main groove
- 3: Land portion
- 4: Width direction groove
- 5: Width direction sipe
- 5a: Narrow sipe section
- 5b: Widened section
- 5c: Sipe bottom
- 51: Sipe width gradually increasing part
- 52: Middle part
- 53: Sipe width gradually decreasing part
- 61-64: Rubber portion
- 100, 200: Communication device
- CL: Tire equatorial plane
- TE: Tread edge

## Claims

1. A pneumatic tire having a land portion defined by grooves on a tread surface of a tread portion, wherein
the land portion has one or more sipes,
the sipe has a narrow sipe section that extends from an opening to the tread surface to an inner side in a tire radial direction, and a widened section that is connected to an inner end in the tire radial direction of the narrow sipe section and extends to a sipe bottom, having a sipe width that is larger than that of the narrow sipe section,
an extension length in the tire radial direction of the widened section is longer than an extension length in the tire radial direction of the narrow sipe section,
the widened section has, on a side connecting to the narrow sipe section, a part defined by two tire radial outer edges which extend in straight lines in a cross-sectional view at an angle with respect to the tire radial direction, and
each of the tire radial outer edges extends at an inclination angle of 30 to 70° with respect to a width direction in a cross-section perpendicular to an extending direction of the sipe.

2. The pneumatic tire as described in claim 1, wherein each of the tire radial outer edges extends at an inclination angle of 40 to 65° with respect to the width direction in a cross-section perpendicular to the extending direction of the sipe.

3. The pneumatic tire as described in claim 1 or 2, wherein the widened section has, on a side of the sipe bottom, a part defined by two tire radial inner edges which are inclined with respect to the tire radial direction, and
each of the tire radial inner edges extends at an inclination angle of 30 to 60° with respect to the width direction in a cross-section perpendicular to the extending direction of the sipe.

4. The pneumatic tire as described in any one of claims 1 to 3, wherein the widened section has a sipe width gradually increasing part where the sipe width gradually increases from the outer side to the inner side in the tire radial direction, connecting to the narrow sipe section, and a sipe width gradually decreasing part where the sipe width gradually decreases from the outer side to the inner side in the tire radial direction, extending to the sipe bottom.

5. The pneumatic tire as described in any one of claims 1 to 4, wherein the widened section is roughly rhombic in cross-sectional view.

6. The pneumatic tire as described in any one of claims 1 to 4, wherein the widened section is roughly hexagonal in cross-sectional view.

7. The pneumatic tire as described in any one of claims 1 to 6, wherein the narrow sipe section is a flat sipe.

8. The pneumatic tire as described in any one of claims 1 to 6, wherein the narrow sipe section is a three-dimensional sipe that extends while bending in the depth direction.

9. The pneumatic tire as described in any one of claims 1 to 8, having one or more circumferential main grooves extending in a tire circumferential direction, and
the sipe is provided at least on an outermost land portion in a tire width direction, which is defined by a tread edge and the circumferential main groove.
